(19) **Europäisches Patentamt European Patent Office Office européen des brevets**

(11) **EP 2 284 799 B1**

(12) **EUROPEAN PATENT SPECIFICATION**

(45) Date of publication and mention
of the grant of the patent:
**07.11.2012 Bulletin 2012/45**

(51) Int Cl.:
*G06T 11/00* (2006.01)        *G06F 3/048* (2006.01)

(21) Application number: **10169562.5**

(22) Date of filing: **14.07.2010**

(54) **The method for colour picking over an image data to be used in graphical user interface**

Verfahren zur Farbauswahl über Bilddaten zur Verwendung auf einer graphischen Benutzeroberfläche

Procédé de capture de couleur sur des données d'images à utiliser dans une interface d'utilisateur graphique

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **15.07.2009 TR 200905493**

(43) Date of publication of application:
**16.02.2011 Bulletin 2011/07**

(73) Proprietor: **Cabot Communications Limited Bristol BS16 3RY (GB)**

(72) Inventor: **Church, Nick Bristol, BS16 5UE (GB)**

(74) Representative: **Cayli, Hülya Paragon Consultancy Inc. Koza Sokak No: 63/2 GOP 06540 Ankara (TR)**

(56) References cited:
EP-A2- 0 301 207          CA-A1- 2 594 133
US-A- 5 463 702          US-A- 5 638 190
US-A1- 2007 257 933      US-A1- 2008 239 403
US-B1- 6 415 065

• Anonymous: "Generating a Website Color Scheme from an Image" 17 September 2008 (2008-09-17), pages 1-6, XP002604930 Retrieved from the Internet: URL:http://www.atalasoft.com/ products/doti mage/white-papers/generating-a-website-col or-scheme-from-an-image [retrieved on 2010-10-11]
• C. Ridpath et al.: "Techniques for Accessiblity Evaluation And Repair Tools" 26 April 2000 (2000-04-26), pages 1-63, XP002604931 Retrieved from the Internet: URL:http://www.w3.org/TR/ AERT [retrieved on 2010-10-13]

## Description

### Field of the Invention

The present invention relates to a method for the chosen colours to be applied to the user interface, allowing the automatically colour picking over the required image data considering user's pleasure, in the devices having graphical user interface such as cell phones, portable media players, digital cameras, PC's, televisions and set-top boxes.

### Prior Art

Graphical user interface (GUI) is a software audit method which uses graphics instead of text command lines, including screen icons, menus, dialog boxes and objects, which can be carried by a mark-up device generally such as a mouse, or which can be resized.

In the known art, there are many methods intended to render the graphical interface of the user. Yet, in the current methods there are procedures which are to be manually applied by the user in order to perform satisfactory colour schemes, which are occasionally found complex and confusing. Accordingly, manually applied procedures may cause loss of time.

A method used in the known art relates to the picking of the dominant colours over the image data. In the said method, there is a dialogue box where the image data is loaded, and the dominant colours are shown on the box. The user is supposed to pick the colour desired to use in the GUI from the list himself where the dominant colours are shown. However, in the circumstance that the dominant colours are quite similar; the colours may not be differentiated from each other and become illegible as the colours of the image occurred in the user interface are also similar.

Image data used in another method in the art is divided into segments. The dominant colours are shown zone-by-zone over the image data. The requirement of manual process and complexity of processing on the image data where the similar colours prevail are among the drawbacks of the known art.

In another method, the colour scheme is formed by using a specific algorithm by a single colour. The colour scheme formed is based on a single colour; thus it does not comply with the image data as required. Furthermore, in this method it is also needed to conduct the process manually as in the others.

Additionally, there are various options offered intended to change the user interface manually in the dialog boxes of the computer systems.

The art disclosed in patent document no. US 6,888,648 B2 includes the steps of decision of the zone where the colour signal value is chosen, picking of the sample colour signal, calculation of the relevant colour signal value of the mentioned colour zone, showing of the zone where the colour signal value is chosen on a image data together with a coloured graphic picture on an image data; and determining of the relevant colour signal value and compatibility of the coloured graphical picture of the mentioned colour zone, based on the colour signal values on the zone where the colour signal value is chosen.

The document "Anonymous "Generating a Website Color Scheme from an Image" 17 September 2008 (2008-09-17) pages 1-6, XP002604930 Retrieved from the Internet: URL: hftp://www.atalasoft.com/products/dotimage/white-papers/generafing-a-website-color-scheme-from-an-image". This document discloses a generating a colour scheme for a website using the colours of an image. In this document, first colours of the image are converted to 8 bit colours. Then, it is counted how many pixels are included for each colour. A colour histogram is created by the colours of the pixels. In the histogram, colours are sorted by their frequency. According to a distance function, all the colours that satisfies tolerance requirement are sorted. Finally, user gets the desired number of colours from the sorted colours.

Patent document with number CA 2594133 A1 discloses an algorithm for generating scrapbook layout colour scheme. In order to generate said colour scheme, dominant colours of at least one image are used. According to this document, firstly a colour histogram of an image is generated according to hue values of the image pixels. Then, most frequent colour is determined from histogram. Additional colours may be acquired from said histogram.

Another document related to present invention C. Ridpath at al.: "Techniques for Accessibility Evaluation And Repair Tools" 26 April 2000 (2000-04-26), pages 1-63, XP002604931 Retrieved from the Internet: URL: http://www.w3.org/TR/AERT. In the related part of this document, brightness differences and colour of two colours are disclosed. By using brightness and colour difference of two colours, visibility is improved.

### Brief Description of the Invention

There are usage difficulties of the manual systems which are used in the customization of the graphical user interface, which causes loss of time. In the present invention, a method has been developed to form a colour scheme, picking dominant colours automatically over the desired image data, and rendering an interface utilizing the colour data over this scheme, without the need for manual procedures in the known art.

In the method developed by the present invention, the image data is loaded from any source including the external storage device and video images. After image data is loaded, the algorithm concerning the colour picking is processed. In the circumstance that the image data is an image flow such as the video, the algorithm is continuously processed on the image frame accordingly. After choosing the base colour, other appropriate colours are also formed. Following the completion of the colour scheme, it is processed on the graphical user interface.

**Objective of the Invention**

The object of the present invention is to develop a method which provides automatically performing of the colour scheme complying with the image data over the desired one.

Another object of the invention is to develop a method which provides the graphical interface to be arranged with the automatically picked colours over the required image data by providing ease of use and eliminating loss of time.

**Brief Description of the Figures**

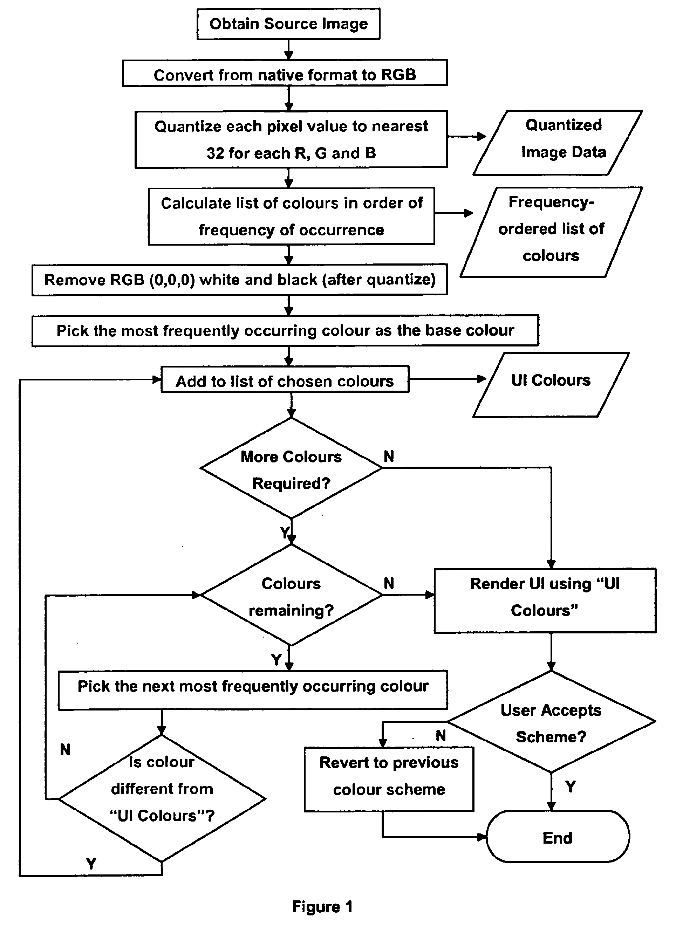

**Figure1.** A chart flow according to the invention

**Detailed Description of the Invention**

The invention in the hereby method provides the graphical user interface to be arranged with the automatically picked colours over a chosen data image considering user's pleasure, in the devices having graphical user interface such as cell phones, portable media players, digital cameras, PC's, televisions and set-top boxes.

As shown in the chart flow in Figure 1 according to present invention, firstly, the image data preferred to be used from any source is loaded including the external storage devices and video images. The picked image data is, later, converted to the RGB (red, green, blue) format. Each pixel value is quantized by rounding them to 32 and folds thereof. For example, RGB (21, 59,131) is rounded and become RGB (32, 64,128). Thereby, the frequencies of the RGB sets are calculated and a colour frequency list, which is ranged from the highest to the lowest frequency, is obtained. The white, RGB (255, 255, 255), and the black, RGB (0, 0, 0), are extracted from the list. The most frequently occurring colour, which means the dominant one, is picked as the base colour from the remaining list.

In the list, which is ranged from the highest to the lowest frequency, the proper contrast found behind the base colour is chosen for the second colour to be used. This colour can be used as the second colour in the interface. However, the compliance of the second colour shall be checked by performing the contrast test.

For detection of the contrast properness of the second colour, the degree of tone and brightness difference among the colours shall be determined. W3C colour contrast test is performed for detection of difference. Thus, whereas the first colour is (R1, G1, B1) and the second colour is (R2, G2, B2);

The brightness difference of the two colours is equal to the maximum values of the brightness difference of the first colour from the second colour, and the brightness difference of the second colour from the first colour.

Brightness of the first colour;

$$\text{Brightness 1} = ((R1 \times 299) + (G1 \times 587) + (B1 \times 114)) / 1000$$

Brightness of the second colour;

$$\text{Brightness 2} = ((R2 \times 299) + (G2 \times 587) + (B2 \times 114)) / 1000$$

$$\text{Brightness difference} = \max(\text{Brightness1} - \text{Brightness2}, \text{Brightness2} - \text{Brightness1})$$

The difference between the two colours, on the other hand, equals to the sum of the difference between the maximum and the minimum values of the colours red, green and blue.

Colour difference: (max (R1, R2)-min (R1, R2)) + (max (G1, G2)-min (G1, G2)) + (max (B1, B2)-min (B1, B2))

If brightness difference is bigger than 125, or colour difference is bigger than 500 according to the results of the abovementioned W3C test; then the colour is properly contrasted. When the colour is appropriate according to test results, it is added to the list of chosen colours to be used as an interface colour.

In the circumstance that the user requires to use more colours; the colour which has the highest frequency coming after the other two colours is chosen, if there is a remaining one.

If the colour chosen is unlike the interface colours which are previously listed, then it is added to the list of chosen to be used as an interface colour. This process can be reiterated depending on how many colours the user requires, or until the colour chosen appears same with the interface colour. Thereby, all the colours chosen are added to the interface colour list.

When user does not intent to use more colours, or when the colours run out; the colours chosen are processed on the interface. The process is over when the scheme used in the interface is approved and accepted by the user. If the user requires changing the user interface, the process is completed by reverting to the previous colour scheme.

**Claims**

1. A colour picking method for rendering a graphical user interface to be arranged with colours that are automatically picked from a chosen image data considering user's desires, comprising the following steps;

   • Converting the image data from a native format to a red, green, blue format, and each pixel value of the converted image data is quantized by rounding to 32 and multiples thereof, Calculating the ocurrence frequencies of the quantized red, green, blue sets and obtaining a colour frequency list ordered from the highest to the lowest occurrence frequency,
   • Removing the white colour, which has a red, green, blue value of 255, 255, 255 , and the black colour, which has a red, green, blue value of 0, 0, 0 from the list obtained, and picking the most frequently occuring colour in the remaining list as a base colour,
   • Selecting a second colour, which has highest occurrence frequency coming after the base colour in the remaining list.
   • Calculating a tone and brightness difference of the base colour and the second colour to detect the contrast properness of the second colour by performing a W3C colour contrast test; wherein a brightness difference and a colour difference are calculated as:

     - Brightness difference = max(Brightness1 - Brightness2, Brightness2 - Brightness1),
     - Colour difference = (max(R1, R2) - min((R1, R2) + (max(G1, G2) - min((G1, G2) + (max(B1, B2) - min((B1, B2);
     wherein R1, G1, B1 refers to the base colour,
     R2, G2, B2 to the second colour, and Brightness1 and Brightness2 are the brightness of the base colour and second colour respectively,

   • Repeating the selecting and calculating step until the proper contrast is provided for the second colour to be used,
   • Adding the colour, which has proper contrast according to the tone and brightness difference with the base colour, to a list of chosen colours to be used as an interface colour,
   • The colours chosen are processed for rendering the interface when the user does not require using more colours, or when there is no more available colour.

2. A colour picking method according to Claim 1, wherein in the circumstance that the user requires more colours; a colour, which has the highest occurence frequency coming after the last tried colour in the colour frequency list, is chosen if there is a remaining one.

**EP 2 284 799 B1**

## Patentansprüche

1. Verfahren zur Farbauswahl zum Schaffen einer graphischen Benutzeroberfläche, die mit Farben auszustatten ist, die automatisch aus ausgewählten Bilddaten unter Beachtung von Wünschen eines Nutzers ausgewählt werden, umfassend die folgenden Schritte:

   - Umwandeln der Bilddaten aus einem Ursprungsformat in ein Rot-Grün-Blau-Format, wobei jeder Pixelwert der umgewandelten Bilddaten durch Runden auf 32 oder Vielfache davon quantifiziert wird,
   - Berechnen der Häufigkeitsfrequenzen der quantifizierten Rot-Grün-Blau-Sätze und Erhalten einer Farbfrequenzliste geordnet von der höchsten zur niedrigsten Häufigkeitsfrequenz,
   - Entfernen der weißen Farbe, die einen Rot-Grün-Blau-Wert von 255, 255, 255 besitzt, und der schwarzen Farbe, die einen Rot-Grün-Blau-Wert von 0, 0, 0 besitzt, aus der erhaltenen Liste und Auswählen der am häufigsten auftretenden Farbe in der verbleibenden Liste als Basisfarbe,
   - Auswählen einer zweiten Farbe, die die höchste Häufigkeitsfrequenz nach der Basisfarbe in der Liste besitzt,
   - Berechnen eines Farbton- und Helligkeitsunterschieds der Basisfarbe und der zweiten Farbe, um die Kontrastkorrektheit der zweiten Farbe durch Durchführen eines W3C Farbkontrasttestes zu bestimmen, wobei ein Hellikeitsunterschied und ein Farbunterschied wie folgt berechnet werden:

     - Helligkeitsunterschied = max(Helligkeit1 - Helligkeit2, Helligkeit2 - Helligkeit1),
     - Farbunterschied = (max(R1, R2) - min((R1, R2) + (max(G1, G2) - min((G1, G2)+(max(B1, B2)-min((B1, B2);

     wobei R1, G1, B1 sich auf die Basisfarbe und
     R2, G2, B2 sich auf die zweite Farbe beziehen und die Helligkeit1 und Helligkeit2 die Helligkeiten der Basisfarbe bzw. der zweiten Farbe sind,
   - Wiederholen des Auswahl- und Berechnungsschrittes, bis für die zweite zu verwendende Farbe ein sauberer Kontrast geschaffen ist,
   - Zufügen der Farbe, die zur Basisfarbe gemäß des Farbton- und Helligkeitsunterschieds einen sauberen Kontrast besitzt, zu einer Liste ausgewählter Farben, die als Oberflächenfarben zu verwenden sind,
   - Verarbeiten der ausgewählten Farben zum Schaffen der Oberfläche, wenn der Nutzer nicht die Verwendung von weiteren Farben anfordert oder wenn keine weitere Farbe verwendbar ist.

2. Farbauswahlverfahren nach Anspruch 1, wobei in dem Umstand, dass der Nutzer weitere Farben anfordert, eine Farbe, die nach der zuletzt getesteten Farbe in der Farbfrequenzliste die höchste Häufigkeitsfrequenz besitzt, ausgewählt wird, falls es eine Verbleibende gibt.

## Revendications

1. Procédé de capture de couleur pour le rendu d'une interface utilisateur graphique devant être agencée avec des couleurs qui sont capturées automatiquement à partir de données d'image choisies en fonction des souhaits de l'utilisateur, comprenant les étapes suivantes :

   - la conversion des données d'image d'un format natif en un format rouge, vert, bleu, et la conversion de chaque valeur de pixel des données d'image converties en arrondissant à 32 et à ses multiples,
   - le calcul des fréquences d'apparition des ensembles rouge, vert, bleu quantifiés, et l'obtention d'une liste de fréquence de couleur ordonnée de la fréquence d'apparition la plus élevée à la plus faible,
   - la suppression de la couleur blanche, qui a une valeur rouge, vert, bleu de 255, 255, 255, et de la couleur noire, qui a une valeur rouge, vert, bleu de 0, 0, 0 de la liste obtenue, et la capture de la couleur apparaissant le plus fréquemment dans la liste restante comme une couleur de base,
   - la sélection d'une deuxième couleur, qui a la fréquence d'apparition la plus élevée venant après la couleur de base dans la liste restante,
   - le calcul d'une différence de ton et de luminosité de la couleur de base et de la deuxième couleur afin de détecter l'adéquation de contraste de la deuxième couleur en effectuant un test de contraste de couleur W3C ; où une différence de luminosité et une différence de couleur sont calculées comme :
   - différence de luminosité = max(Luminosité1 - Luminosité2, Luminosité2 - Luminosité1),
   - différence de couleur = (max(R1, R2) - min((R1, R2) + (max(G1, G2) - min((G1, G2) + (max(B1, B2)- min((B1, B2) ;
   où R1, G1, B1 fait référence à la couleur de base,

5

R2, G2, B2 fait référence à la deuxième couleur, et Luminosité1 et Luminosité2 sont la luminosité de la couleur de base et de la deuxième couleur respectivement,
- la répétition de l'étape de sélection et de calcul jusqu'à ce que le contraste adéquat soit pourvu pour la deuxième couleur à utiliser,
- l'ajout de la couleur, qui a le contraste adéquat selon la différence de ton et de luminosité avec la couleur de base, à une liste de couleurs choisies pour être utilisées comme une couleur d'interface,
- les couleurs choisies sont traitées pour le rendu de l'interface lorsque l'utilisateur n'a pas besoin d'utiliser plus de couleurs, ou lorsqu'il n'y a pas d'autre couleur disponible.

2. Procédé de capture de couleur selon la revendication 1, dans lequel, dans le cas où l'utilisateur a besoin de plus de couleurs ; une couleur, qui a la fréquence d'apparition la plus élevée venant après la dernière couleur essayée dans la liste de fréquence de couleur, est choisie s'il en reste une.

Obtain Source Image

Convert from native format to RGB

Quantize each pixel value to nearest
32 for each R, G and B → Quantized
Image Data

Calculate list of colours in order of
frequency of occurrence → Frequency-
ordered list of
colours

Remove RGB (0,0,0) white and black (after quantize)

Pick the most frequently occurring colour as the base colour

Add to list of chosen colours → UI Colours

More Colours
Required? — N

Y

Colours
remaining? — N → Render UI using "UI
Colours"

Y

Pick the next most frequently occurring colour

Is colour
different from
"UI Colours"?

N

Y

User Accepts
Scheme?

N → Revert to previous
colour scheme

Y

End

Figure 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6888648 B2

- CA 2594133 A1

**Non-patent literature cited in the description**

- **ANONYMOUS.** *Generating a Website Color Scheme from an Image,* 17 September 2008, 1-6, hftp://www.atalasoft.com/products/dotimage/white-papers/generafing-a-website-color-scheme-from-an-image

- **C. RIDPATH.** *Techniques for Accessibility Evaluation And Repair Tools,* 26 April 2000, 1-63, htttp://www.w3.org/TR/AERT